# EUROPEAN PATENT SPECIFICATION

(11) **EP 3 283 351 B1**
(45) Date of publication and mention of the grant of the patent: **10.06.2020**
(21) Application number: 16780381.6
(22) Date of filing: 13.04.2016
(51) Int. Cl.: B62D 17/00, B62D 7/14

(54) **A SYSTEM FOR STEERING WHEELS OF A MOTOR VEHICLE**
SYSTEM ZUM LENKEN VON RÄDERN EINES KRAFTFAHRZEUGS
SYSTÈME POUR DIRIGER LES ROUES D'UN VÉHICULE À MOTEUR

(30) Priority: 15.04.2015 SE 1550453
(43) Date of publication of application: 21.02.2018
(73) Proprietor: Scania CV AB, 151 87 Södertälje (SE)
(72) Inventor: LUNDGREN, Emil, 120 65 Stockholm (SE); NILSSON, Göran, 647 91 Mariefred (SE)
(74) Representative: Scania CV AB
(86) International application number: PCT/SE2016/050319
(87) International publication number: WO 2016/167711

(56) References cited:
- EP-A1- 0 625 697
- WO-A1-2014/163560
- WO-A1-2014/163560
- CN-A- 104 290 814
- DE-A1-102009 032 644
- DE-A1-102009 032 644
- KR-B1- 100 334 279
- KR-B1- 100 334 279
- US-A- 5 410 109
- US-B1- 6 283 483

## Description

### FIELD OF THE INVENTION AND BACKGROUND ART

The present invention relates to a system according to the preamble of appended claim 1 for steering the wheels of at least one wheeled axle of a motor vehicle and to a method according to the preamble of the appended independent method claim.

The axle to be steered may be any axle of a motor vehicle having an axle beam with a rod, normally called tie rod, connected thereto by two links and by that interconnecting the left and right wheels of the vehicle and a power means of length varying type acting between the axle beam and one of said links by varying its length. Thus, the axle may be powered or unpowered and also be the front axle of the vehicle, but the invention is especially but not exclusively directed to steering the wheels of an unpowered tag axle, which may be placed in any desired order among a vehicles wheeled axles, other than the first, in the vehicles ordinary direction of movement, and the vehicle may have more than one such steered tag axle.

Vehicles provided with steered tag axles are usually heavy vehicles, e.g. trucks and busses, and the invention will be mainly described for that application although it is neither limited to such a vehicle nor to steering of tag axles.

The wheels of a said axle have a so called toe-value defined as the angle made by the wheels with the longitudinal direction of the vehicle in a neutral state of the vehicle in which the vehicle is to be driven in said longitudinal direction. Said toe-value is called toe-in value if said wheels in said neutral state point inwardly in the ordinary direction of movement of the vehicle, e.g. converging, and toe-out value if the wheels in said neutral state point outwardly, e.g. diverging. A said toe-in value may typically be 1 mm/m, e.g. tan α = 10⁻³ if α is the angle made by the wheels with said longitudinal direction. The reason for having a toe-value is that an appropriate selection of that value has a stabilizing influence upon the tyres of the wheels of said axle.

The toe-value of the wheels of a said wheeled axle is for a said motor vehicle usually determined to be the same for the wheels on both ends of said axle, for instance 1 mm/m, in a state when the vehicle is unloaded. However, when the vehicle is loaded and a load is supplied to said wheeled axle the axle beam thereof will be bent, but said rod will not. This bending of the axle beam will result in a change of said toe-value and this change will result in a turning of the wheels at said second end of the axle, since the position of the power means will not be changed as a function of said load. This means that if for instance the toe-in values were 1 mm/m for the wheels at both ends of the axle in an unloaded state of said axle these may have been changed to be 5 mm/m at said second end while remaining 1 mm/m at the first end of the axle in a loaded state of the axle. Such a different toe-value for the wheels at the opposite ends of said axle results in an increased wear of the tyres of the wheels and a tendency of the vehicle to steer to one side, so that the driver of the vehicle has to steer against this tendency for keeping the vehicle driving straight forward when this shall be done.

A system for steering the wheels of at least one wheeled axle of a motor vehicle of this type is known through for example WO 2014/163560 A1.

### SUMMARY OF THE INVENTION

The object of the present invention is to provide a system and a method of the type defined in the introduction being improved in at least some aspect with respect to such systems and methods already known.

This object is with respect to the system obtained by providing such a system with the features listed in the characterizing part of appended claim 1.

Thus, by comparing the value of a load applied on said axle with stored data of change of the toe-value of the wheels of the axle as a function of such a load and calculating the length to be assumed by the power means for obtaining the same toe-value for the wheels at the two ends of said axle and controlling said power means to assume that length, it may be ensured that the toe-value will be the same for the wheels at both ends of said axle irrespectively of the value of said load applied on said axle and e.g. how much said axle beam will be bent. This results in a reduced wear of the tyres of said wheels and a reduced fuel consumption of the vehicle. The tendency of the vehicle to steer to one side will also disappear making it more comfortable for the driver to drive the vehicle.

According to an embodiment of the invention the system is configured to be arranged in a vehicle having said wheeled axle suspended in a chassis of the vehicle through air suspension members comprising air bellows, and said arrangement comprises a pressure sensor configured to provide information about the value of said load to the control unit by measuring the pressure in at least one said air bellow. The air pressure prevailing in such an air bellow may be accurately translated into a load value to be used for obtaining an adaption of the length of said power means for obtaining the same toe-value for the wheels at both ends of said axle.

According to another embodiment of the invention said arrangement comprises a power sensor configured to provide information about the value of said load to said control unit by measuring the power applied through said load on means suspending said wheeled axle in a chassis of the vehicle. This constitutes another suitable way to obtain said load value needed for obtaining said same toe-value for the wheels.

According to another embodiment of the invention said arrangement comprises a position sensor configured to provide information about the value of said load to said control unit by sensing the position of a point or region of said axle beam with respect to a point on a chassis of the vehicle. The position information delivered by such a position sensor is a measure of how much a suspension system of the vehicle is influenced by a load and by that of the value of the load applied on said wheeled axle. According to another embodiment of the invention said power means comprises a power cylinder connected mechanically to said axle beam and directly or indirectly to said first link, the system comprises a pump adapted to conveying a medium under pressure from a medium reservoir optionally to either of two opposite sides of a piston of said power cylinder for varying the length thereof, and the control unit is configured to control said power means by controlling said pump.

According to another embodiment of the invention the system is configured to steer the wheels of an unpowered wheeled tag axle of a vehicle which in the ordinary direction of movement of the vehicle follows after the front axle of the vehicle. A system according to the invention having a said power means of length varying type is especially suitable for steering such a tag axle, especially of a heavy vehicle for increasing the vehicles maneuverability at low vehicle speeds, e.g. when a milk vehicle has to drive into a farm or the like or when busses have to perform delicate maneuvers in traffic, e.g. in narrow streets. For the reasons mentioned above it is then of course advantageous to ensure that the same toe-value is obtained for the wheels at both ends of said tag axle.

According to another embodiment of the invention constituting a further development of the embodiment last mentioned said control unit is configured to control the alignment of said wheels of the tag axle on the basis of information about the alignment of the wheels of the front axle relative to said longitudinal direction of the vehicle.

According to another embodiment of the invention said rod is a so called tie rod extending substantially in parallel with said axle beam or in parallel with said axle beam.

The object of the invention is with respect to the method obtained by providing a method according to the appended independent method claim. The results of applying such a method and the advantages arising therefrom appear clearly from the above description of the system according to the invention.

The invention also relates to a computer program having the features set out in claim 10, a computer program product having the features set out in claim 11, an electronic control unit having the features set out in claim 12, and a wheeled motor vehicle according to claim 13.

Other advantageous features and advantages of the invention appear from the description following below.

### BRIEF DESCRIPTION OF THE DRAWINGS

With reference to the appended drawings, below follows a specific description of embodiments of the invention cited as examples.

In the drawings:
- Fig. 1: is a simplified view illustrating a system for steering a tag axle of a vehicle to which the present invention may apply,
- Fig. 2: is a simplified view from above very schematically illustrating a wheeled axle of a motor vehicle which may be steered through a system according to the invention,
- Fig. 3: is a side view of the axle shown in Fig. 2 suspended in the chassis of a vehicle and schematically illustrating different embodiments of a system according to the invention,
- Fig. 4: is a flow chart of the steps of a method according to an embodiment of the invention carried out for a steering system according to the invention, and
- Fig. 5: is a schematic view illustrating an electronic control unit for implementing methods according to the invention.

### DETAILED DESCRIPTION OF EMBODIMENTS OF THE INVENTION

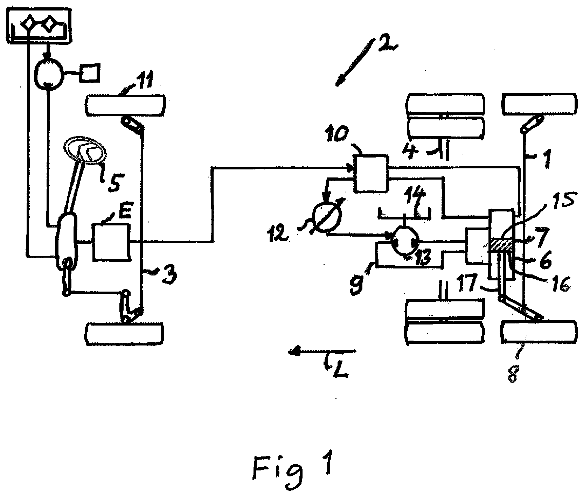

Fig. 1 illustrates very schematically a system for steering an unpowered wheeled tag axle 1 of a vehicle 2 in a form of a truck with a front axle 3 and a powered rear axle 4 situated ahead of the tag axle in the vehicles ordinary direction of movement. It is schematically illustrated how the front axle 3 can in a conventional way be steered by connection to the vehicle's steering wheel 5. A power means in the form of a power cylinder 6 is connected mechanically to the tag axle 1 so as to through a piston 7 of this cylinder control the alignment of the tag axle's wheels 8 relative to the longitudinal direction (arrow L) of the vehicle. It is illustrated how a pressure medium, normally in the form of hydraulic liquid, can be conveyed to and from the power cylinder through lines 9 in order to control the alignment of the tag axle's wheels. This conveying of medium is controlled by a schematically indicated control unit 10 on the basis of information from the vehicles electronic control unit E about the alignment of the wheels 11 of the front axle relative to the longitudinal direction L of the vehicle, and the speed of the vehicle. This general lay out is typical of systems for steering a tag axle of a vehicle.

Said system has also an electric motor 12 adapted to run an hydraulic pump 13 in order, by choice of direction of rotation for the motor, to convey hydraulic liquid under pressure from an oil container 14 to either of two opposite sides 15, 16 of the piston of the power cylinder 6 in order to cause the piston to move and thereby alter the alignment of the tag axles wheels as a result of the connection of the piston rod 17 to a link for turning the wheels.

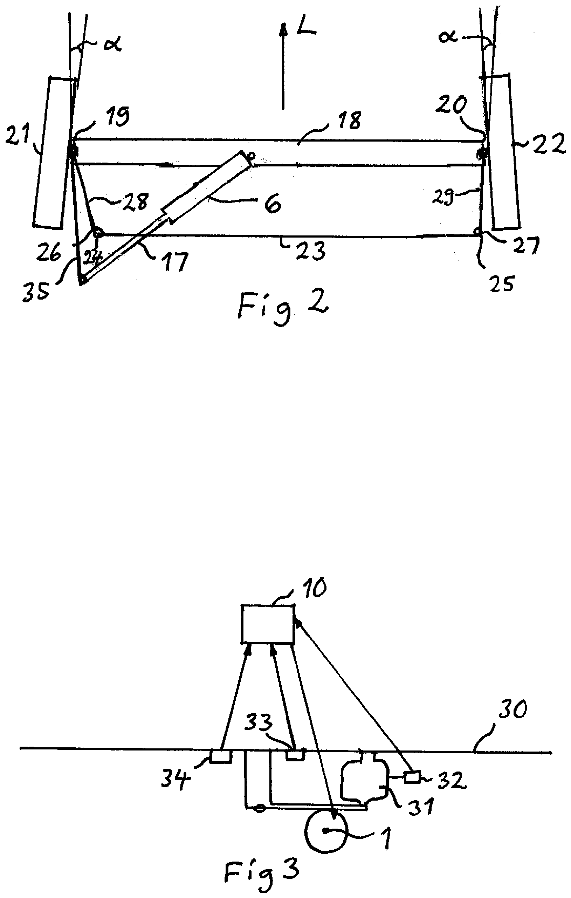

Fig. 2 shows schematically the tag axle 1 and how this comprises an axle beam 18 to opposite ends 19, 20 of which a wheel 21, 22 is connected. A tie rod 23 extending in parallel with the axle beam have opposite ends 24, 25 connected through a hinge 26, 27, such as in the form of a ball joint, to one end of a respective link 28, 29 having the other end connected to a said wheel 21, 22 at a respective end 19, 20 of the axle beam. The power cylinder 6 is connected to a link 35 connected to the axle shaft of the wheel 21 and one end of a first 28 of said links is also connected to said axle shaft and the power cylinder 6 will by that act between the axle beam 18 and said first link 28 at a first end 19 of the axle beam by varying its length by moving the piston thereof inside the cylinder. Thus, the power cylinder acts indirectly between the axle beam 18 and the link 28 connected to the rod 23 by the action between the axle beam 18 and the link 35, since both these links 28, 35 are connected to the axle shaft of the wheel 21 and will follow this wheel when it turns. Such movement will change the direction of the wheels 21, 22 of the tag axle 1 with respect to a longitudinal direction L of the vehicle.

It is assumed that the ordinary direction of movement of the vehicle coincides with the direction of the arrow L and that the vehicle is in a neutral state in which it is to be driven in said longitudinal direction. In this neutral state a so called toe-value is defined as the angle made by the wheels with said longitudinal direction, and it is shown that it is in this case a toe-in value which is strongly exaggerated in the figure by showing the angles α (tan α is in fact usually in the order of 10⁻³).

We do now assume that a heavy load is supplied to the vehicle and transferred to the tag axle 1 and the axle beam 18 thereof, which will then be deflected. The tie rod 23 will not be bent by such a load since it only takes loads in the extension thereof, which means that the toe-value will be changed for the wheel 22 connected to the link 29 to which the power cylinder 6 is not connected would the length of the power cylinder not be changed. However, the toe-in value of the wheel 21 on the opposite end 19 of the axle 1 will not be changed since the length of the power cylinder will not be changed because it has a length sensor with a predefined "straight-forward position". If nothing is done to remove this difference of toe-in value of the wheels 21 and 22 this will result in an increased tyre wear and that the vehicle tends to steer to one side when the driver try to steer it straight forwardly. The present invention takes care of this problem, and it is schematically illustrated in Fig. 3 how this may be done.

It is shown in Fig. 3 how the tag axle 1 is suspended in a chassis of the vehicle through air suspension members comprising air bellows 31. A pressure sensor 32 measures the pressure inside a said air bellow and provides the control unit 10 with information about this pressure, which is dependent upon the load applied to the tag axle 1. The control unit 10 is configured to compare the load value so determined with stored data of change of a toe-value of the wheels of the tag axle as a function of the load and to calculate the length to be assumed by the power cylinder 6 for obtaining the same toe-value for the wheels at both ends 19, 20 of the axle 1. The control unit is configured to then control the power cylinder 6 to assume this length calculated in the neutral state of the vehicle shown in Fig. 2. Thus, the power cylinder gets a new "straight-forward position" and this position means that the toe-in value will be equally distributed to the left and right wheels This means that said problem arising from different toe-values of said wheels will be solved.

Other possibilities to obtain said load value needed for obtaining the same toe-value of the wheels 21 and 22 exist. A power sensor 33 may be arranged to provide information about the value of said load by measuring the power applied through said load on means suspending the axle 1. Another option would be to arrange a position sensor 34 configured to sense the position of a point or region of the axle beam with respect to a point on the chassis of the vehicle, e.g. how much the chassis moves vertically with respect to said axle as a consequence of the load applied through the chassis on the tag axle.

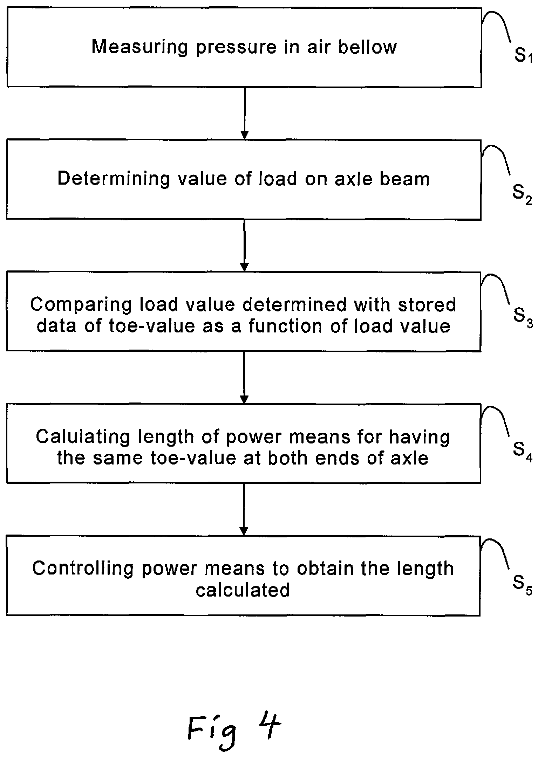

Fig. 4 illustrates a flow chart of a method according to an embodiment of the present invention carried out for steering the wheels of a wheeled axle of a motor vehicle as the one shown in Fig. 1. The method is started with a step S₁ of measuring the pressure in an air bellow of a suspension system of the vehicle. The value of load on the axle beam of the tag axle is then determined in a step S₂ through the information from said pressure measurement. The load value determined is then in step S₃ compared with stored data of toe-values as a function of load value for calculating the length of the power means for having the same toe-value at both ends of the tag axle in a step S₄. Finally, the power means is in a step S₅ controlled to obtain the length calculated in step S₄.

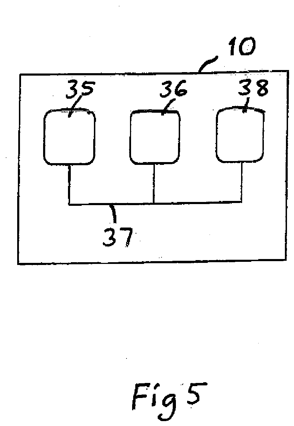

Computer program code for implementing a method according to the invention is with advantage included in a computer program which can be read into the internal memory of a computer, e.g. the internal memory of an electronic control unit of a motor vehicle. Such a computer program is with advantage provided via a computer program product comprising a data storage medium which can be read by a computer and which has the computer program stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type. Fig. 5 illustrates very schematically an electronic control unit 10 comprising an execution means 35, e.g. a central processor unit (CPU), for execution of computer software. The execution means 35 communicates with a memory 36, e.g. of the RAM type, via a data bus 37. The control unit 10 comprises also a non-transitory data storage medium 38, e.g. in the form of a flash memory or a memory of the ROM, PROM, EPROM or EEPROM type. The execution means 35 communicates with the data storage medium 38 via the data bus 37. A computer program comprising computer program code for implementing a method according to the invention, e.g. in accordance with the embodiment illustrated in Fig. 4, is stored on the data storage medium 38.

The invention is of course in no way restricted to the embodiments described above, since many possibilities for modifications thereof are likely to be obvious to one skilled in the art without having to derivate from the scope of invention defined in the appended claims.

It is shown in Fig. 2 how the piston rod of the power cylinder is connected to a separate link, but it may for instance be directly connected to said first link close to the tie rod.

## Claims

1. A system for steering the wheels (21, 22) of at least one wheeled axle (1) of a motor vehicle (2), said axle having an axle beam (18) to opposite ends (19, 20) of which at least one said wheel is connected, said system comprising
• a rod (23) having opposite ends connected through a hinge (26, 27) to one end of a respective link (28, 29) having the other end connected to said at least one wheel (21, 22) at a respective end (19, 20) of said axle beam,
• a power means (6) configured to act between said axle beam (18) and a first (28) of said links at a first end (19) of said axle beam (18) by varying its length so as to control the direction of said wheels of said axle with respect to a longitudinal direction (L) of the vehicle, and
• a control unit (10) configured to control said power means (6) for controlling the direction of the wheels of said axle with respect to said longitudinal direction of the vehicle,
**characterized in that** the system further comprises an arrangement configured to determine the value of a load applied on said axle beam (18) and send information thereabout to said control unit (10), that the control unit is configured to compare said load value determined with stored data of change of a so called toe-value of the wheels of said first (19) and the opposite second end (20) of the axle as a function of said load, said toe-value being defined as the angle made by said wheels with said longitudinal direction in a neutral state of the vehicle in which the vehicle is to be driven in said longitudinal direction, and to calculate the length to be assumed by said power means (6) for obtaining the same toe-value for the wheels (21, 22) at said first and second ends (19, 20) of said axle, and that the control unit (10) is configured to control said power means (6) to assume said length calculated in said neutral state of the vehicle.

2. A system according to claim 1, **characterized in that** it is configured to be arranged in a vehicle having said wheeled axle (1) suspended in a chassis (30) of the vehicle through air suspension members comprising air bellows (31), and that said arrangement comprises a pressure sensor (32) configured to provide information about the value of said load to the control unit (10) by measuring the pressure in at least one said air bellow.

3. A system according to claim 1, **characterized in that** said arrangement comprises a power sensor (33) configured to provide information about the value of said load to said control unit (10) by measuring the force resulting from the application of said load on means (31) suspending said wheeled axle in a chassis (30) of the vehicle.

4. A system according to claim 1, **characterized in that** said arrangement comprises a position sensor (34) configured to provide information about the value of said load to said control unit (10) by sensing the position of a point or region of said axle beam (18) with respect to a point on a chassis (30) of the vehicle.

5. A system according to any of the preceding claims, **characterized in that** said power means comprises a power cylinder (6) connected mechanically to said axle beam (18) and directly or indirectly to said first link (28), that the system comprises a pump (13) adapted to conveying a medium under pressure from a medium reservoir (14) optionally to either of two opposite sides of a piston (7) of said power cylinder for varying the length thereof, and that the control unit (10) is configured to control said power means (6) by controlling said pump (13).

6. A system according to any of the preceding claims, **characterized in that** it is configured to steer the wheels (21, 22) of an unpowered wheeled tag axle (1) of a vehicle which in the ordinary direction of movement of the vehicle follows after the front axle (3) of the vehicle.

7. A system according to claim 6, **characterized in that** said control unit (10) is configured to control the alignment of said wheels of the tag axle (1) on the basis of information about the alignment of the wheels (11) of the front axle (3) relative to said longitudinal direction (L) of the vehicle.

8. A system according to any of the preceding claims, **characterized in that** said rod (23) is a so called tie rod extending substantially in parallel with said axle beam or in parallel with said axle beam.

9. A method for steering the wheels (21, 22) of at least one wheeled axle (1) of a motor vehicle (2), said axle having an axle beam (18) to opposite ends (19, 20) of which at least one said wheel is connected, in which a rod (23) has opposite ends connected through a hinge (26, 27) to one end of a respective link (28, 29) having the other end connected to said at least one wheel at a respective end of said axle beam, the method comprising the step of
controlling the direction of said wheels (21, 22) of said axle with respect to a longitudinal direction (L) of the vehicle by controlling power means (6) configured to act between said axle beam (18) and a first (28) of said links at a first end (19) of said axle beam to vary its length,
**characterized in that** it further comprises the following steps:
• determining the value of a load applied on said axle beam (18),
• comparing said load value determined with stored data of change of a so called toe-value of the wheels of said first (19) and an opposite second end (20) of the axle as a function of said load, said toe-value being defined as the angle made by said wheels with said longitudinal direction in a neutral state of the vehicle in which the vehicle is to be driven in said longitudinal direction,
• calculating the length to be assumed by said power means (6) for obtaining the same toe-value for the wheels (21, 22) at said first and second ends (19, 20) of said axle, and
• controlling said power means (6) to assume said length calculated in said neutral state of the vehicle.

10. A computer program comprising computer program code for causing a computer to implement a method according to claim 9 when the computer program is executed in the computer.

11. A computer program product comprising a non-transitory data storage medium (38) which can be read by a computer and on which the program code of a computer program according to claim 10 is stored.

12. An electronic control unit (10) of a motor vehicle comprising an execution means (35), a memory (36) connected to the execution means (35) and a non-transitory data storage medium (38) which is connected to the execution means and on which the computer program code of a computer program according to claim 10 is stored.

13. A wheeled motor vehicle, especially a heavy vehicle (2) such as a truck or a bus, **characterized in that** it comprises a system according to any of claims 1-8 and/or an electronic control unit according to claim 12.

## Patentansprüche

1. System zum Lenken der Räder (21, 22) wenigstens einer beräderten Achse (1) eines Kraftfahrzeugs (2), wobei die Achse einen Achskörper (18) aufweist, mit dessen entgegengesetzten Enden (19, 20) zumindest eines der Räder verbunden ist, wobei das System aufweist
• eine Stange (23) mit entgegengesetzten Enden, die durch ein Gelenk (26, 27) mit einem Ende eines entsprechenden Zwischengliedes (28, 29) verbunden sind, dessen anderes Ende mit dem zumindest einen Rad (21, 22) an einem zugehörigen Ende (19, 20) des Achskörpers verbunden ist,
• eine Servoeinrichtung (6), die dazu eingerichtet ist, zwischen dem Achskörper (18) und einem ersten (28) der Zwischenglieder an einem ersten Ende (19) des Achskörpers (18) durch Verändern ihrer Länge zu wirken, um die Richtung der Räder der Achse bezüglich einer Längsrichtung (L) des Fahrzeugs zu steuern, und
• eine Steuereinheit (10), die dazu eingerichtet ist, die Servoeinrichtung (6) zum Steuern der Richtung der Räder der Achse bezüglich der Längsrichtung des Fahrzeugs zu steuern,
**dadurch gekennzeichnet, dass** das System ferner eine Anordnung aufweist, die dazu eingerichtet ist, den Wert einer auf den Achskörper (18) ausgeübten Last zu bestimmen und Information darüber an die Steuereinheit (10) zu senden, und dass die Steuereinheit dazu eingerichtet ist, den ermittelten Lastwert mit gespeicherten Änderungsdaten eines sogenannten Spurwertes der Räder des ersten (19) und des entgegengesetzten zweiten Endes (20) der Achse als eine Funktion der Last zu vergleichen, wobei der Spurwert als der Winkel festgelegt ist, der zwischen den Rädern und der Längsrichtung in einem neutralen Zustand des Fahrzeugs gebildet ist, in dem das Fahrzeug in die Längsrichtung gefahren werden soll, und die von der Servoeinrichtung (6) einzunehmende Länge zum Erzielen desselben Spurwertes für die Räder (21, 22) an dem ersten und zweiten Ende (19, 20) der Achse zu berechnen, und dass die Steuereinheit (10) dazu eingerichtet ist, die Servoeinrichtung (6) zum Einnehmen der in dem neutralen Zustand des Fahrzeugs berechneten Länge anzusteuern.

2. System nach Anspruch 1, **dadurch gekennzeichnet, dass** es dazu eingerichtet ist, in einem Fahrzeug mit der beräderten Achse (1) angeordnet zu werden, die in einem Fahrgestell (30) des Fahrzeugs durch Luftfederungselemente mit Luftbälgen (31) aufgehängt ist, und dass die Anordnung einen Drucksensor (32) umfasst, der dazu eingerichtet ist, Information über den Wert der Last an die Steuereinheit (10) zu liefern durch Messen des Drucks in wenigstens einem der Luftbälge.

3. System nach Anspruch 1, **dadurch gekennzeichnet, dass** die Anordnung einen Kraftsensor (33) umfasst, der dazu eingerichtet ist, Information über den Wert der Last an die Steuereinheit (10) zu liefern durch Messen der aus der Aufbringung der Last resultierenden Kraft auf Mittel (31), die die beräderte Achse in einem Fahrgestell (30) des Fahrzeugs aufhängen.

4. System nach Anspruch 1, **dadurch gekennzeichnet, dass** die Anordnung einen Positionssensor (34) umfasst, der dazu eingerichtet ist, Information über den Wert der Last an die Steuereinheit (10) zu liefern durch Erfassen der Position eines Punktes oder Bereichs des Achskörpers (18) bezüglich eines Punktes an einem Fahrgestell (30) des Fahrzeugs.

5. System nach einem der vorhergehenden Ansprüche, **dadurch gekennzeichnet, dass** die Servoeinrichtung einen Servozylinder (6) aufweist, der mechanisch mit dem Achskörper (18) und unmittelbar oder mittelbar mit dem ersten Zwischenglied (28) verbunden ist, dass das System eine Pumpe (13) umfasst, die dazu eingerichtet ist, ein Medium unter Druck aus einem Mediumbehälter (14) optional zu jeder von zwei entgegengesetzten Seiten eines Kolbens (7) des Servozylinders zu leiten, um dessen Länge zu verändern, und dass die Steuereinheit (10) dazu eingerichtet ist, die Servoeinrichtung (6) durch Steuern der Pumpe (13) zu steuern.

6. System nach einem der vorhergehenden Ansprüche, **dadurch gekennzeichnet, dass** es dazu eingerichtet ist, die Räder (21, 22) einer nicht angetriebenen beräderten Nachlaufachse (1) eines Fahrzeugs zu lenken, die in der normalen Bewegungsrichtung des Fahrzeugs auf die Vorderachse (3) des Fahrzeugs folgt.

7. System nach Anspruch 6, **dadurch gekennzeichnet, dass** die Steuereinheit (10) dazu eingerichtet ist, die Ausrichtung der Räder der Nachlaufachse (1) auf der Basis von Information über die Ausrichtung der Räder (11) der Vorderachse (3) relativ zur Längsrichtung (L) des Fahrzeugs zu steuern.

8. System nach einem der vorhergehenden Ansprüche, **dadurch gekennzeichnet, dass** die Stange (23) eine sogenannte Spurstange ist, die im Wesentlichen parallel zum Achskörper oder parallel zum Achskörper verläuft.

9. Verfahren zum Lenken der Räder (21, 22) wenigstens einer beräderten Achse (1) eines Kraftfahrzeugs (2), wobei die Achse einen Achskörper (18) aufweist, mit dessen entgegengesetzten Enden (19, 20) zumindest eines der Räder verbunden ist, wobei eine Stange (23) entgegengesetzte Enden hat, die durch ein Gelenk (26, 27) mit einem Ende eines entsprechenden Zwischengliedes (28, 29) verbunden sind, dessen anderes Ende mit dem zumindest einen Rad an einem zugehörigen Ende des Achskörpers verbunden ist, wobei das Verfahren den Schritt umfasst des Steuerns der Richtung der Räder (21, 22) der Achse bezüglich einer Längsrichtung (L) des Fahrzeugs durch Steuern einer Servoeinrichtung (6), die dazu eingerichtet ist, zwischen dem Achskörper (18) und einem ersten (28) der Zwischenglieder an einem ersten Ende (19) des Achskörpers zum Verändern ihrer Länge zu wirken,
**dadurch gekennzeichnet, dass** es ferner die folgenden Schritte umfasst:
• Ermitteln des Wertes einer auf den Achskörper (18) ausgeübten Last,
• Vergleichen des ermittelten Lastwertes mit gespeicherten Änderungsdaten eines sogenannten Spurwertes der Räder des ersten (19) und eines entgegengesetzten zweiten Endes (20) der Achse in Abhängigkeit der Last, wobei der Spurwert als der Winkel festgelegt ist, der zwischen den Rädern und der Längsrichtung in einem neutralen Zustand des Fahrzeugs gebildet ist, in dem das Fahrzeug in der Längsrichtung gefahren werden soll,
• Berechnen der von der Servoeinrichtung (6) zum Erzielen desselben Spurwertes für die Räder (21, 22) an dem ersten und zweiten Ende (19, 20) der Achse einzunehmenden Länge, und
• Steuern der Servoeinrichtung (6) zum Einnehmen der berechneten Länge in dem Neutralzustand des Fahrzeugs.

10. Computerprogramm mit Computerprogrammcode, um einen Computer dazu zu veranlassen, ein Verfahren nach Anspruch 9 zu implementieren, wenn das Computerprogramm in dem Computer ausgeführt wird.

11. Computerprogrammprodukt mit einem nichtflüchtigen Datenspeichermedium (38), das von einem Computer gelesen werden kann und auf dem der Programmcode eines Computerprogramms nach Anspruch 10 gespeichert ist.

12. Elektronische Steuereinheit (10) eines Kraftfahrzeugs mit einer Ausführungseinrichtung (35), einem mit der Ausführungseinrichtung (35) verbundenen Speicher (36) und einem nichtflüchtigen Datenspeichermedium (38), das mit der Ausführungseinrichtung verbunden ist und auf dem der Computerprogrammcode eines Computerprogramms nach Anspruch 10 gespeichert ist.

13. Berädertes Kraftfahrzeug, insbesondere ein Schwerlastfahrzeug (2) wie etwa ein Lastwagen oder ein Bus, **dadurch gekennzeichnet, dass** es ein System nach einem der Ansprüche 1 bis 8 und/oder eine elektronische Steuereinheit nach Anspruch 12 aufweist.

## Revendications

1. Système pour la direction des roues (21, 22) d'au moins un essieu à roues (1) d'un véhicule à moteur (2), ledit essieu ayant une poutre d'essieu (18) à des extrémités opposées (19, 20) auxquelles au moins une dite roue est connectée, ledit système comprenant
• une barre (23) ayant des extrémités opposées connectées par une charnière (26, 27) à une extrémité d'une liaison respective (28, 29) ayant l'autre extrémité connectée à ladite au moins une roue (21, 22) à une extrémité respective (19, 20) de ladite poutre d'essieu,
• un moyen de puissance (6) configuré pour agir entre ladite poutre d'essieu (18) et une première (28) desdites liaisons à une première extrémité (19) de ladite poutre d'essieu (18) par la variation de sa longueur de manière à contrôler la direction desdites roues dudit essieu par rapport à une direction longitudinale (L) du véhicule, et
• une unité de commande (10) configurée pour contrôler ledit moyen de puissance (6) pour le contrôle de la direction des roues dudit essieu en ce qui concerne ladite direction longitudinale du véhicule,
**caractérisé en ce que** le système comprend en outre un agencement configuré pour déterminer la valeur d'une charge appliquée sur ladite poutre d'essieu (18) et envoyer des informations à ce sujet à ladite unité de commande (10), **en ce que** l'unité de commande est configurée pour comparer ladite valeur de charge déterminée avec des données stockées de changement d'une ainsi dite valeur de pincement des roues dudit premier (19) et de la deuxième extrémité opposée (20) de l'essieu comme une fonction de ladite charge, ladite valeur de pincement étant défini comme l'angle fait par lesdites roues avec ladite direction longitudinale dans un état neutre du véhicule dans lequel le véhicule doit être conduit dans ladite direction longitudinale, et pour calculer la longueur à assumer par lesdits moyens de puissance (6) pour l'obtention de la même valeur de pincement pour les roues (21, 22) auxdites première et deuxième extrémités (19, 20) dudit essieu, et que l'unité de commande (10) est configurée pour commander lesdits moyens de puissance (6) pour assumer ladite longueur calculée dans ledit état neutre du véhicule.

2. Système selon la revendication 1, **caractérisé en ce qu'**il est configuré pour être agencé dans un véhicule ayant ledit essieu de roues (1) suspendu dans un châssis (30) du véhicule par des éléments de suspension pneumatique comprenant des soufflets pneumatiques (31), et que ledit agencement comprend un capteur de pression (32) configuré pour fournir des informations sur la valeur de ladite charge à l'unité de commande (10) par la mesure de la pression dans au moins un desdits soufflets d'air.

3. Système selon la revendication 1, **caractérisé en ce que** ledit agencement comprend un capteur de puissance (33) configuré pour fournir des informations à propos de la valeur de ladite charge à ladite unité de commande (10) par la mesure de la force résultant de l'application dudit moyen de charge (31) suspendant ledit essieu à roues dans un châssis (30) du véhicule.

4. Système selon la revendication 1, **caractérisé en ce que** ledit agencement comprend un capteur de position (34) configuré pour fournir des informations à propos de la valeur de ladite charge à ladite unité de commande (10) par la détection de la position d'un point ou d'une région de ladite poutre d'essieu (18) par rapport à un point sur un châssis (30) du véhicule.

5. Système selon l'une quelconque des revendications précédentes, **caractérisé en ce que** lesdits moyens de puissance comprennent un vérin (6) connecté mécaniquement à ladite poutre d'essieu (18) et directement ou indirectement à ladite première liaison (28), que le système comprend une pompe (13) adaptée pour le transport d'un fluide sous pression depuis un réservoir de fluide (14) facultativement vers l'un ou l'autre des deux côtés opposés d'un piston (7) dudit vérin pour y varier sa longueur, et que l'unité de commande (10) est configurée pour contrôler lesdits moyens d'alimentation (6) par le contrôle de ladite pompe (13).

6. Système selon l'une quelconque des revendications précédentes, **caractérisé en ce qu'**il est configuré pour diriger les roues (21, 22) d'un essieu porteur à roues non motorisé (1) d'un véhicule qui, dans le sens ordinaire de déplacement du véhicule, suit l'essieu avant (3) du véhicule.

7. Système selon la revendication 6, **caractérisé en ce que** ladite unité de commande (10) est configurée pour contrôler l'alignement desdites roues de l'axe porteur (1) sur base d'informations à propos de l'alignement des roues (11) de l'essieu avant (3) par rapport à ladite direction longitudinale (L) du véhicule.

8. Système selon l'une quelconque des revendications précédentes, **caractérisé en ce que** ladite barre (23) est une barre d'accouplement qui s'étend sensiblement en parallèle avec ladite poutre d'essieu ou en parallèle avec ladite poutre d'essieu.

9. Procédé pour la direction des roues (21, 22) d'au moins un essieu à roues (1) d'un véhicule à moteur (2), ledit essieu ayant une poutre d'essieu (18) à des extrémités opposées (19, 20) dont au moins une desdites roues est connectée, dans laquelle une barre (23) a des extrémités opposées connectées par une charnière (26, 27) à une extrémité d'une liaison respective (28, 29) ayant l'autre extrémité connectée à ladite au moins une roue à une extrémité respective de ladite poutre d'essieu, le procédé comprenant l'étape
du contrôle de la direction desdites roues (21, 22) dudit essieu par rapport à une direction longitudinale (L) du véhicule par la commande de moyens de puissance (6) configurés pour agir entre ladite poutre d'essieu (18) et une premières (28) desdites liaisons à une première extrémité (19) de ladite poutre d'essieu pour varier sa longueur,
**caractérisé en ce qu'**il comprend en outre les étapes suivantes :
• la détermination de la valeur d'une charge appliquée sur ladite poutre d'essieu (18),
• la comparaison de ladite valeur de charge déterminée avec des données stockées de changement d'une ainsi dite valeur de pincement des roues desdites première (19) et d'une deuxième extrémité opposée (20) de l'essieu comme une fonction de ladite charge, ladite valeur de pincement étant définie comme l'angle fait par lesdites roues avec ladite direction longitudinale dans un état neutre du véhicule dans lequel le véhicule doit être conduit dans ladite direction longitudinale,
• le calcul de la longueur à assumer par lesdits moyens de puissance (6) pour l'obtention de la même valeur de pincement pour les roues (21, 22) aux première et deuxième extrémités (19, 20) dudit essieu, et
• le contrôle desdits moyens de puissance (6) pour assumer ladite longueur calculée dans ledit état neutre du véhicule.

10. Programme informatique comprenant un code de programme informatique pour amener un ordinateur à mettre en œuvre un procédé selon
la revendication 9 lorsque le programme informatique est exécuté sur l'ordinateur.

11. Produit de programme informatique comprenant un support de stockage de données non transitoire (38) qui peut être lu par un ordinateur et sur lequel le code de programme d'un programme informatique selon la revendication 10 est stocké.

12. Unité de commande électronique (10) d'un véhicule à moteur comprenant un moyen d'exécution (35), une mémoire (36) connectée au moyen d'exécution (35) et un support de stockage de données non transitoire (38) qui est connecté au moyen d'exécution et sur lequel le code de programme d'un programme informatique selon la revendication 10 est stocké.

13. Véhicule moteur à roues, particulièrement un véhicule lourd (2) comme un camion ou un bus, **caractérisé en ce qu'**il comprend un système selon l'une quelconque des revendications 1-8 et/ ou une unité de commande électronique selon la revendication 12.
